(19) Europäisches Patentamt
European Patent Office
Office européen des brevets

(11) **EP 2 665 618 B1**

(12) **EUROPÄISCHE PATENTSCHRIFT**

(45) Veröffentlichungstag und Bekanntmachung des Hinweises auf die Patenterteilung:
**04.11.2020 Patentblatt 2020/45**

(21) Anmeldenummer: **11721010.4**

(22) Anmeldetag: **04.05.2011**

(51) Int Cl.:
*B60L 53/14* (2019.01)    *B60L 53/00* (2019.01)
*B60L 53/63* (2019.01)    *B60L 53/67* (2019.01)
*H02J 3/14* (2006.01)    *H02J 13/00* (2006.01)
*H02J 7/00* (2006.01)    *B60L 53/30* (2019.01)

(86) Internationale Anmeldenummer:
**PCT/EP2011/057114**

(87) Internationale Veröffentlichungsnummer:
**WO 2012/149965 (08.11.2012 Gazette 2012/45)**

(54) **VERFAHREN UND VORRICHTUNG ZUR BEREITSTELLUNG ELEKTRISCHER ENERGIE**

METHOD AND APPARATUS FOR PROVIDING ELECTRICAL ENERGY

PROCÉDÉ ET DISPOSITIF DE FOURNITURE D'ÉNERGIE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.11.2013 Patentblatt 2013/48**

(73) Patentinhaber: **Siemens Aktiengesellschaft 80333 München (DE)**

(72) Erfinder:
• EGER, Kolja
  85521 Ottobrunn (DE)
• KEPKA, Alexander
  90427 Nürnberg (DE)
• ZWIRLEIN, Andreas
  81379 München (DE)

(56) Entgegenhaltungen:
EP-A1- 1 580 862       WO-A1-2010/120551
WO-A2-01/73921        WO-A2-2011/018270
US-A1- 2005 043 858    US-A1- 2010 134 067

**Beschreibung**

Die Erfindung betrifft ein Verfahren und eine Vorrichtung zur Bereitstellung elektrischer Energie.

Für die Elektromobilität ist eine Infrastruktur erforderlich, die ein Aufladen von Elektro-Fahrzeugen aus einem Stromnetz ermöglicht. Hierzu sind vorzugsweise Ladestationen vorgesehen, an denen die Elektro-Fahrzeuge zum Laden angeschlossen werden können. Weiterhin gibt es zusätzliche Komponenten bzw. Funktionen zur Authentifizierung, Abrechnung oder Überwachung der Ladevorgänge.

Hierbei ist es problematisch, bei einer Vielzahl von Ladevorgängen, die zu unterschiedlichen Zeitpunkten initiiert werden, die verfügbare elektrische Energie effizient und fair zu verteilen. Ein weiteres Problem besteht darin, in solch einer Lastverteilungssituation vorgegebene Bedingungen, z.B. "Laden mit ökologischem Strom" bzw. Kapazitätsgrenzen von Ladestationen, Leitungen oder Transformatoren einzuhalten.

[WO 2011/018270 A2] betrifft ein Verfahren und eine Vorrichtung zur Steuerung von Ladestationen für Elektrofahrzeuge. Zur Minimierung von Spitzenleistungsanforderungen sind zumindest zwei Ladestationen zu einer Gruppe zusammengefasst, wobei innerhalb der Gruppe Ist-Ladeparameter zwischen den Ladestationen ausgetauscht werden. Abhängig von zumindest den Ist-Ladeparametern wird eine Lastprognose für die Gruppe erstellt sowie Soll-Ladeparameter für die Ladestationen der Gruppe abhängig von der Lastprognose bestimmt.

[US 2010/0134067 A1] betrifft mehrere Ladestationen für elektrische Fahrzeuge welche mit einer gemeinsamen Steuereinheit gekoppelt und als Gruppe an eine gemeinsam genutzte Energieversorgungsleitung angeschlossen sind. Mit Hilfe der Steuereinheit erfolgt, zumindest für einen bestimmten Zeitraum, eine dynamische Zuteilung von Ladeströmen zu den jeweiligen Ladestationen, wobei eine Überschreitung der Kapazität der Versorgungsleitung vermieden wird.

[WO 2010/120551 A1] betrifft ein Lade-Managementsystem für elektrische Geräte, welches die Ladeaktivitäten beispielsweise für Elektrofahrzeuge koordiniert, wobei bedingt durch die Ladeströme auftretende Leistungsspitzen durch Anwendung eines "safe failure mode" vermieden werden.

US 2005/043858 A1 betrifft ein Kommunikationssystem für ein elektrisches Leistungsnetzwerk.

[WO 01/73921 A2] betrifft ein Verfahren und eine Vorrichtung zur Koordination der Ansteuerung Unterbrechungsfreier Leistungsversorgungsmodule (UPS) für skalierbare und redundante Leistung. Mehre UPS sind mit einem Logik-Bus, Leistungsversorgung und Kommunikation zu einander verbunden. Die Rolle als Master ist virtuell vergeben, da jedes UPS diese Rolle einnehmen kann. Um die Fehlertolerant zu erhöhen, werden bei einem Fehlerfall, die Signale an eine vorbestimmte UPS weitergeleitet, die die Fähigkeiten des ausgefallenen Masters übernimmt und selbst einen Backup Master bestimmte. Der Backup Master überprüft hierbei stetig die korrekte Funktion des Masters. Wird ein Fehler detektiert, wird ein $V_{error}$ Signal zu den anderen UPS. Der Backup Master übernimmt die Rolle des Masters und nimmt entsprechend eine Neukonfiguration vor.

EP 1 580 862 A1 betrifft ein Leistungserzeugungssystem mit einem Set an Stromleistungsquellen und Leistungswandlern. Ein Leistungswandler ist als Master gesetzt. Wenn kein Master aktiviert ist, wird ein zur Verfügung stehender Leistungswandler als Master gesetzt.

Die Aufgabe der Erfindung besteht darin, die vorstehend genannten Nachteile zu vermeiden und insbesondere ein effizientes und faires Lastmanagement zum Laden von Elektro-Fahrzeugen anzugeben.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Verfahren und ein System zur Bereitstellung elektrischer Energie angegeben, gemäß der unabhängigen Ansprüche.

Bei dem Ladesystem kann es sich um eine Hardware-Komponente und/oder um eine Software-Funktionalität handeln. Das Ladesystem kann auf unterschiedlichen Einheiten als Software-Funktionalität implementiert sein. Insbesondere kann das Ladesystem Teil der Ladestation oder Teil einer anderen Ladestation oder Teil einer zentralen Komponente sein.

Der vorgestellte Ansatz ermöglicht somit ein Lastmanagement für ein Ladesystem umfassend z.B. mehrere Ladestationen, die beispielsweise Teil einer öffentlich zugänglichen Stromtankstelle sind. Das Lastmanagement bestimmt eine Lastverteilung unter Einhaltung verschiedener Bedingungen, die sowohl wirtschaftlicher als auch (netz-)technischer Art sein können. Beispielsweise können so Netzengpässe vermieden werden und gleichzeitig kann sichergestellt werden, dass ein Ladevorgang mit einem ökologischen Strom (also z.B. einem Strom, der aus erneuerbaren Energiequellen stammt) durchgeführt wird.

Zur Einhaltung der Bedingungen kann das Lastmanagement den maximalen Ladestrom bzw. die maximale Leistungsaufnahme an den einzelnen Ladestationen regeln und garantiert so eine Form von Fairness zwischen den Ladevorgängen (auch unter Einhaltung von z.B. Prioritäten oder Vertragseigenschaften).

Das zentrale Lastmanagement kann entweder direkt oder mithilfe anderer Komponenten im Gesamtsystem den Ladestationen entsprechende Vorgaben machen und von diesen Statuswerte beziehen.

Der zentralisierte Ansatz hat den Vorteil, dass eine zentrale Authentifizierung einfach bereitgestellt werden kann. Ein weiterer Vorteil besteht darin, dass Informationen über die Vertragsart des Kunden, die z.B. nicht auf einer Karte, die zu Laden benutzt wird, gespeichert sind, in der zentralen Instanz vorliegen und entsprechend genutzt werden können.

Weiterhin wird ein dezentrales Lastmanagement vorgeschlagen, das die gleichen Verfahren zur Bestimmung der Lastverteilung verwenden kann wie das zentrale Lastmanagement, aber kein Operation Center oder Leitsystem benötigt. Das Lastmanagement wird dezentral durchgeführt, d.h. die Ladevorgänge oder Ladestationen organisieren sich selbständig. Vorzugsweise wird für eine initiale Einstellung bzw. Parametrierung der Ladestationen oder Ladevorgänge eine zentrale Komponente eingesetzt.

Eine Weiterbildung ist es, dass die Lastverteilung bestimmt wird anhand mindestens einer Nebenbedingung und/oder einer Anzahl der angeschlossenen oder aktiven Ladestationen.

Eine andere Weiterbildung ist es, dass die Nebenbedingung mindestens eine der Vorgaben umfasst:

- eine vorgegebene maximal zulässige Kapazität;
- ein Gewichtungsfaktor oder eine Priorisierung;
- ein maximal zulässiger Ladestrom insbesondere pro Ladevorgang oder pro Basisstation oder pro Elektro-Fahrzeug.

Insbesondere ist es eine Weiterbildung, dass die maximal zulässige Kapazität mindestens eine der folgenden Möglichkeiten umfasst:

- eine vorgegebene maximal zulässige Kapazität der Ladestation;
- eine vorgegebene maximal zulässige Kapazität eines Kabels;
- eine vorgegebene maximal zulässige Kapazität eines Transformators;
- eine vorgegebene maximal zulässige Kapazität einer Ortsnetzstation;
- eine vorgegebene maximal zulässige Kapazität gemäß Vereinbarung oder Vertrag;
- eine vorgegebene maximal zulässige Kapazität eines Elektro-Fahrzeugs,
- eine vorgegebene maximal zulässige Kapazität einer Energiequelle,
- eine vorgegebene maximal zulässige Kapazität eines virtuellen Kraftwerks (Virtual Power Plant) (umfassend z.B. Aggregation von einer Vielzahl von Energiequellen).

Auch ist es eine Weiterbildung, dass das Ladesystem ein zentrales Ladesystem ist.

Ferner ist es eine Weiterbildung, dass das Ladesystem von einer Master-Ladestation bereitgestellt wird.

Im Rahmen einer zusätzlichen Weiterbildung wird die Master-Ladestation anhand einer Kennung ermittelt.

Beispielsweise kann als Master-Ladestation die Ladestation mit der betragsmäßig kleinsten Kennung selektiert werden.

Eine nächste Weiterbildung besteht darin, dass eine Konfiguration oder eine Parametrierung der Ladestation anhand einer zentralen Komponente durchgeführt wird.

Eine Ausgestaltung ist es, dass (z.B. vorab) mindestens eine Backup-Master-Ladestation bestimmt wird.

Die mindestens eine Backup-Master-Ladestation kann anhand ihrer Kennung bestimmt werden. Beispielsweise ist diejenige Ladestation mit der zweitkleinsten Kennung die erste Backup-Master-Ladestation, usf.

Eine alternative Ausführungsform besteht darin, dass die Master-Ladestation jede Status-Änderung an die mindestens eine Backup-Master-Ladestation übermittelt und die mindestens eine Backup-Master-Ladestation die Lastverteilung anhand der Status-Änderungen bestimmt.

Eine nächste Ausgestaltung ist es, dass die Master-Ladestation die bestimmte Lastverteilung an die mindestens eine Backup-Master-Basisstation übermittelt.

So ist jede der Backup-Master-Ladestationen in der Lage, die Master-Station zu ersetzen basierend auf der lokal bei der Backup-Master-Ladestation verfügbaren Lastverteilung. Auch ist es möglich, dass die Master-Ladestation, z.B. zu vorgegebenen Zeitpunkten oder auf Veranlassung, die Information zur aktuellen Lastverteilung an die mindestens eine Backup-Master-Ladestation übermittelt.

Auch ist es eine Ausgestaltung, dass bei einem Ausfall der Master-Ladestation die nächste Backup-Master-Ladestation aktiviert wird bzw. sich selbst aktiviert.

Eine Weiterbildung besteht darin, dass eine reaktivierte ehemalige Master-Ladestation zunächst nicht wieder als Master-Ladestation genutzt wird.

Dies kann z.B. sichergestellt werden, indem die Kennung der ehemaligen Master-Ladestation entsprechend modifiziert wird, so dass sie nicht das Kriterium zur Selektion als Master-Ladestation erfüllt. Beispielsweise kann hierfür die Kennung um eine Versionsnummer ergänzt werden.

Eine zusätzliche Ausgestaltung ist es, dass das Ladesystem dezentral von jeder Ladestation bereitgestellt wird, wobei die elektrische Energie von der Ladestation eingestellt wird basierend auch auf Informationen oder Nachrichten anderer Ladestationen. Dieser Ansatz wird auch als "Gossiping-Verfahren" bezeichnet und eignet sich insbesondere für große Netze, bei denen eine zentrale Verarbeitung zu aufwändig ist. Die Koordinierung erfolgt ohne zentrales Ladesystem, die Ladestationen können als ein Peer-to-Peer (P2P)-Netz miteinander Nachrichten austauschen, wobei basierend auf solchen Nachrichten z.B. verschiedene Schätzwerte ermittelt werden betreffend beispielsweise einen Energieverbrauch in dem P2P-Netz. Basierend auf diesen Schätzwerten entscheidet eine Lastmanagement-Komponente der Ladestation über die Einstellung des Ladestroms.

Eine andere Ausgestaltung ist es, dass anhand der bereitgestellten elektrischen Energie mindestens ein Elektro-Fahrzeug (bzw. mindestens eine Batterie des Elektro-Fahrzeugs) geladen wird.

Die vorstehend genannte Aufgabe wird auch gelöst durch eine Vorrichtung zum Bereitstellen elektrischer Energie mit einer Verarbeitungseinheit, die derart eingerichtet ist, dass

- eine Status-Änderung an ein Ladesystem übermittelbar ist;
- wobei eine von dem Ladesystem ermittelte Lastverteilung empfangen oder insbesondere lokal bereitgestellt wird;
- die elektrische Energie gemäß der Lastverteilung bereitstellbar ist.

Das Ladesystem kann eine Hardware-Komponente oder eine Funktion (z.B. als Software) sein, die Teil der Vorrichtung, Teil einer (anderen) Ladestation oder Teil einer zentralen Einheit sein kann.

Die Verarbeitungseinheit kann insbesondere eine Prozessoreinheit und/oder eine zumindest teilweise festverdrahtete oder logische Schaltungsanordnung sein, die beispielsweise derart eingerichtet ist, dass das Verfahren wie hierin beschrieben durchführbar ist. Besagte Verarbeitungseinheit kann jede Art von Prozessor oder Rechner oder Computer mit entsprechend notwendiger Peripherie (Speicher, Input/Output-Schnittstellen, Ein-Ausgabe-Geräte, etc.) sein oder umfassen.

Die vorstehenden Erläuterungen betreffend das Verfahren gelten für die Vorrichtung entsprechend. Die Vorrichtung kann in einer Komponente oder verteilt in mehreren Komponenten ausgeführt sein. Insbesondere kann auch ein Teil der Vorrichtung über eine Netzwerkschnittstelle (z.B. das Internet) angebunden sein.

Eine Weiterbildung ist es, dass die Vorrichtung als eine Ladestation insbesondere zum Laden eines Elektro-Fahrzeugs ausgeführt ist.

Ausführungsbeispiele der Erfindung werden nachfolgend anhand der Zeichnungen dargestellt und erläutert.

Es zeigen:

Fig.1 ein schematisches Schaubild zum Laden von Elektro-Fahrzeugen über ein Energienetz;

Fig.2 eine schematische Architektur eines dezentralen Lastmanagements, das den Ansatz "Wahl eines Masters" ermöglicht bzw. unterstützt;

Fig.3 ein beispielhaftes Zustandsdiagramm für eine Ladestation.

Es wird vorgeschlagen, eine Lastverteilung zu optimieren, d.h. z.B. eine effiziente und/oder faire Lastverteilung bereitzustellen, und dabei insbesondere verschiedene Randbedingungen einzuhalten. Als Randbedingungen wird beispielsweise mindestens eine der folgenden Maßgaben berücksichtigt:

- jede Ladesession kann durch eine ID (auch bezeichnet als Identifikation oder Kennung) eine Ladeeinrichtung (z.B. einer Ladestation) und z.B. anhand einer Vertragsart eines Nutzers oder eines zu ladenden Fahrzeugs einer Gruppe oder mehreren Gruppen zugeordnet werden;
- für eine Gruppe kann eine Kapazität, z.B. eine Ladekapazität, vorgegeben oder auf andere Art bestimmt sein;
- eine Begrenzung eines Ladestroms kann für einen Ladevorgang oder für jeden Ladevorgang vorgegeben werden;
- jeder Ladevorgang kann beispielsweise mit einem Basis-Ladestrom oder einem Mindest-Ladestrom versorgt werden;
- für jeden Ladevorgang kann ein Gewichtungsfaktor im Hinblick auf eine Priorisierung des Ladevorgangs bestimmt werden.

Eine Ortsnetzstation verfügt beispielsweise über eine Vielzahl von Abgängen zum Niederspannungsnetz mit einer Vielzahl von Anschlusspunkten, über die beispielsweise ein Ladevorgang eines Fahrzeugs mittels einer Ladestation erfolgen kann. Eine Ortsnetzstation ist über (mindestens) einen Transformator mit einem Energienetz auf der Mittelspannungsebene verbunden. Der Transformator stellt eine vorgegebene maximale Ladekapazität bereit. Diese maximale Ladekapazität soll durch die Anschlusspunkte eingehalten werden. Weiterhin kann das Energienetz über den Transformator unterschiedliche Stromarten, z.B. einen günstigen Strom und einen ökologisch gewonnenen Strom (nachfolgend bezeichnet als "ökologischer Strom"), bereitstellen. Die Stromarten können mit unterschiedlichen Preisen verknüpft sein. Beispielsweise kann es eine Maßgabe eines Kunden sein, dass der Ladevorgang zu x% (mit x=0...100) mit ökologischen Strom erfolgen soll. Dies kann z.B. vertraglich geregelt sein und bei dem Ladevorgang entsprechend berücksichtigt werden. Auch ist es möglich, diese Maßgabe als Wunsch zu behandeln und, sofern der Wunsch nicht erfüllt werden kann, auf eine Alternative (hier z.B. den günstigen Strom) auszuweichen. Insoweit kann ein Kunde beispielsweise einer Gruppe zugeordnet sein, die ausschließlich oder vorzugsweise Ladevorgänge mit ökologischem Strom durchführt (die Vertragsart kann mit der Gruppenzugehörigkeit verknüpft sein).

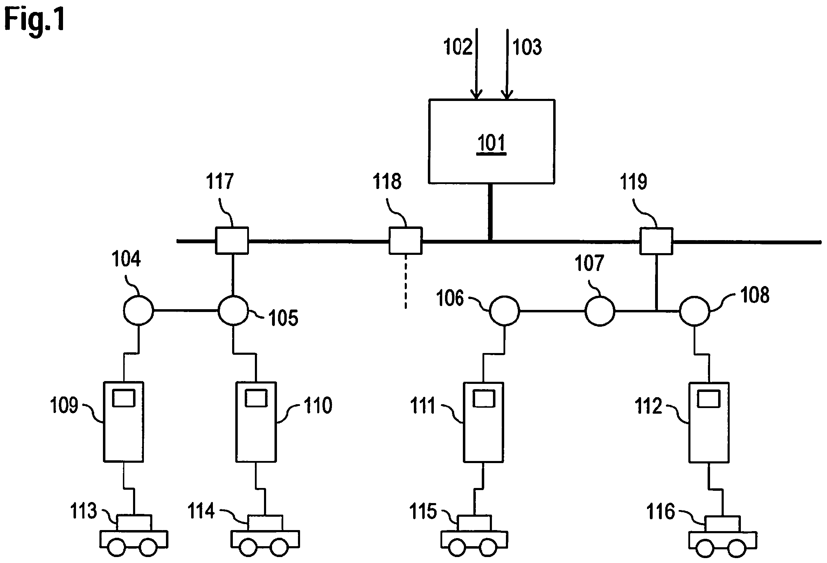

Fig.1 zeigt einen Transformator 101, der von einem Energienetz mit ökologischen Strom 102 und mit günstigem Strom 103 versorgt werden kann. Der Transformator 101 ist beispielsweise Teil einer Ortsnetzstation.

Der Transformator 101 ist über eine Leitung mit drei Abgängen 117, 118 und 119 verbunden. Der Abgang 117 ist über einen Anschlusspunkt 104 mit einer Ladestation 109 verbunden, an der ein Elektro-Fahrzeug 113 geladen wird. Der Abgang 117 ist weiterhin über einen Anschlusspunkt 105 mit einer Ladestation 110 verbunden, an der ein Elektro-Fahrzeug 114 geladen wird. Beispielhaft ist ferner der Abgang 119 mit den Anschlusspunkten 106 bis 108 verbunden, wobei der Anschlusspunkt 106 mit einer Ladestation 111 verbunden ist, an der ein Elektro-Fahrzeug 115 geladen wird und wobei der Anschlusspunkt 108 mit einer Ladestation 112 verbunden ist, an der ein Elektro-Fahrzeug 116 geladen wird.

Beispielsweise stellt sowohl der Transformator 101 in der Ortsnetzstation als auch jeder der Abgänge 117 bis 119 eine maximale Kapazität bereit, die nicht überschritten werden darf.

In einem (zentralen oder dezentralen) Ladesystem wird für jeden Ladevorgang eine Kennung (ID) verwaltet. Der Ladevorgang für ein Elektro-Fahrzeug weist ferner einen maximal zulässigen Ladestrom $I^{MAX}$ auf. Dieser maximal zulässige Ladestrom ergibt sich z.B. als ein Minimum der den Ladevorgang begrenzenden Größen: Beispielsweise ist der maximale Ladestrom begrenzt durch

- eine maximal zulässige Ladekapazität des Kabels zwischen dem Elektro-Fahrzeug und der Ladestation,
- eine maximal zulässige Ladekapazität der Ladestation,
- eine maximal zulässige Ladekapazität des Kabels zwischen der Ladestation und dem Abgang.

Die kleinste der maximal zulässigen Ladekapazitäten (anschaulich: das schwächste Glied der Kette) ist ausschlaggebend für den maximal zulässigen Ladestrom $I^{MAX}$.

Vorzugsweise wird ein (zeitlich begrenzter) Ladevorgang genau einem Vertrag zugeordnet. Der Vertrag gibt an, ob z.B. ökologischer Strom oder günstiger Strom verwendet werden soll. Auch Mischformen aus Stromarten sind möglich. Ergänzend sei darauf hingewiesen, dass in dem Beispiel der Anschaulichkeit halber nur zwei Stromarten unterschieden werden. Entsprechend sind viele unterschiedliche Stromarten, z.B. von unterschiedlichen Anbietern, ggf. mit unterschiedlichen Preisen, möglich. Mit einem Vertrag kann ein Kontingent in Bezug auf die maximal zulässige Ladekapazität verknüpft sein.

Das Ladesystem kann ein Profil pro Gruppe und Tag erhalten, beispielsweise können eine Vielzahl von Werten pro Zeiteinheit (z.B. 96 Viertelstundenwerte pro Tag) bereitgestellt oder vorgegeben werden.

Nachfolgend wird im Hinblick auf Fig.1 ein Beispiel dargestellt:
Das Elektro-Fahrzeug 113 erhält eine Kennung ID1 für den Ladevorgang, das Elektro-Fahrzeug 114 erhält eine Kennung ID2 für den Ladevorgang, das Elektro-Fahrzeug 115 erhält eine Kennung ID3 für den Ladevorgang und das Elektro-Fahrzeug 116 erhält eine Kennung ID4 für den Ladevorgang. Die Elektro-Fahrzeuge 113 und 115 mit den Kennungen ID1 und ID3 sollen mit ökologischem Strom 102 und die Elektro-Fahrzeuge 114 und 116 mit den Kennungen ID2 und ID4 mit günstigem Strom 103 geladen werden.

Es ergeben sich somit beispielhaft die folgenden Gruppen:

- Gruppe $G_{\ddot{o}k}$, die mit ökologischem Strom geladen wird/werden soll:

$$G_{\ddot{o}k} = \{1, 3\};$$

- Gruppe $G_{g\ddot{u}nst}$, die mit günstigem Strom geladen wird/werden soll:

$$G_{g\ddot{u}nst} = \{2, 4\};$$

- Gruppe $G_{Abg1}$, die an dem Abgang 117 geladen wird/werden soll:

$$G_{Abg1} = \{1, 2\};$$

- Gruppe $G_{Abg2}$, die an dem Abgang 118 geladen wird/werden soll:

$$G_{Abg2} = \{ \};$$

- Gruppe $G_{Abg3}$, die an dem Abgang 119 geladen wird/werden soll:

$$G_{Abg3} = \{3, 4\};$$

- Gruppe $G_{Trafo}$, die an dem Transformator geladen werden (sollen):

$$G_{Trafo} = \{1, 2, 3, 4\}.$$

In den geschweiften Klammern {...} sind die Kennungen der für die jeweilige Gruppe betroffenen Elektro-Fahrzeuge 113 bis 116 enthalten. Alternativ ist es ebenso möglich, die Kennungen ID1 bis ID4 als Kennungen für die Ladevorgänge zu bezeichnen.

Jede Gruppe oder eine Auswahl der Gruppen hat beispielsweise eine Kapazitätsbeschränkung $C_{Gruppe}$.

Nachfolgend wird beispielhaft ein zentrales oder auch dezentrales (siehe dazu weiter unten) Ladesystem (auch bezeichnet als "Lastmanagement") unter Berücksichtigung z.B. einer entsprechenden Lastverteilung beschrieben. Die Lastverteilung erfolgt vorzugsweise unter Berücksichtigung vorgegebener Nebenbedingungen. Das Ladesystem ermittelt beispielsweise einen Parameter $I^{Target}$, der die maximale Leistungsaufnahme (Strom) pro Ladevorgang bzw. Ladestation bestimmt. Das Ladesystem kann beispielsweise gemäß oder basierend auf der Norm IEC 61851 betrieben werden.

Beispielshaft kann das Ladesystem eine Schnittstelle umfassen, das die folgenden Funktionen (z.B. realisiert als Funktionsaufrufe) bereitstellt:

- energyRequest() : Mitteilung an das Lastmanagement über einen weiteren (neuen) Ladevorgang;
- sessionEnd() : Ende eines Ladevorgangs;
- sessionUpdate() : Aktualisierung von Statuswerten eines Ladevorgangs;
- energySet() : Setzen des Parameters $I^{Target}$ als ein Sollwert durch das Ladesystem.

Hierbei sei erwähnt, dass der Ladevorgang auch als eine Sitzung (oder als eine "Session") bezeichnet werden kann.

Nachfolgend wird ein beispielhafter Ansatz erläutert, der über die Steuerung des Parameters $I^{Target}$ beispielsweise eine effiziente und faire Verteilung der Gesamtkapazität ermöglicht.

Faire Lastverteilung der Gesamtkapazität

In diesem Szenario ist eine Gesamtkapazität C vorgegeben. Weiterhin gibt es nur eine einzelne Gruppe und die Anzahl der Ladevorgänge n ist bekannt. Der Sollwert $I^{Target}$ für die Lastverteilung ergibt sich zu:

$$I^{Target} = \frac{C}{n}$$

Die Lastverteilung kann wie folgt durchgeführt werden:

(a) Eine Ladestation informiert das (zentrale) Ladesystem über eine Status-Änderung, z.B. mittels der vorstehend genannten Funktionen energyRequest(), sessionEnd(), sessionUpdate).

(b) In einem nächsten Schritt ermittelt das Ladesystem bei jeder Status-Änderung eine Lastverteilung und übermittelt diese an die Ladestation(en).

Faire gewichtete Lastverteilung

Auch in diesem Szenario ist die Gesamtkapazität C vorgegeben, es gibt nur eine einzelne Gruppe und die Anzahl der Ladevorgänge n ist bekannt. Für einen Ladevorgang $s \in S$ wird ein Gewichtungsfaktor $w_s$ für eine Priorisierung definiert. Die Lastverteilung kann in Form eines Vektors

$$I^{\text{Target}} = \left( I_s^{\text{Target}}, s \in S \right)$$

bestimmt werden.

Der Sollwert der Lastverteilung $I_s^{\text{Target}}$ pro Ladevorgang ergibt sich zu:

$$I_s^{\text{Target}} = \frac{w_s \cdot C}{\sum_{s \in S} w_s} \qquad \forall s \in S$$

Die Lastverteilung erfolgt analog den Schritten des vorstehend erläuterten Szenarios "Faire Lastverteilung der Gesamtkapazität".

Beispiel: Mit einer Gesamtkapazität C=100 und n=10 Ladevorgängen sowie einer Gewichtung der 10 Ladevorgänge gemäß dem folgenden Vektor w folgt daraus der Lastverteilungsvektor $I^{\text{Target}}$:

$$w = \begin{bmatrix} 3 \\ 1 \\ 3 \\ 2 \\ 3 \\ 2 \\ 3 \\ 2 \\ 1 \\ 1 \end{bmatrix} \Rightarrow I^{\text{Target}} = \begin{bmatrix} 14,2857 \\ 4,7619 \\ 14,2857 \\ 9,5238 \\ 14,2857 \\ 9,5238 \\ 14,2857 \\ 9,5238 \\ 4,7619 \\ 4,7619 \end{bmatrix}$$

Faire Lastverteilung mit zwei Nebenbedingungen

Auch in diesem Szenario ist die Gesamtkapazität C vorgegeben, es gibt nur eine einzelne Gruppe und die Anzahl der Ladevorgänge n ist bekannt. Der Ladestrom kann für jeden Ladevorgang s einzeln auf einen maximalen Ladestrom $I^{\text{MAX}}$ begrenzt sein:

$$I^{\text{MAX}} = \left( I_s^{\text{MAX}}, s \in S \right)$$

Die Lastverteilung kann beispielsweise mittels eines sogenannten "Max-Min Flow Control"-Verfahrens erfolgen (vgl.: D. Bertsekas, R. Gallager: "Data Networks", 2nd Edition, Prentice-Hall, 1992, Seiten 527, 528).

Beispiel: Mit einer Gesamtkapazität C=100 und n=10 Ladevorgängen sowie einer Begrenzung des Ladestroms pro Ladevorgang ergibt sich daraus ein Lastverteilungsvektor $I^{\text{Target}}$ zu:

$$I^{\mathrm{MAX}} = \begin{bmatrix} 6 \\ 6 \\ 2 \\ 2 \\ 17 \\ 5 \\ 22 \\ 5 \\ 5 \\ 25 \end{bmatrix} \qquad \Rightarrow \qquad I^{\mathrm{Target}} = \begin{bmatrix} 6 \\ 6 \\ 2 \\ 2 \\ 17 \\ 5 \\ 22 \\ 5 \\ 5 \\ 25 \end{bmatrix}$$

Faire gewichtete und proportionale Lastverteilung

Jeder Ladevorgang kann durch eine Kennung der Ladestation und durch eine Vertragsart verschiedenen Gruppen zugeordnet werden. Für jede Gruppe kann eine maximale Kapazität $C_{\mathrm{GruppeID}}$ definiert werden. Für jeden Ladevorgang kann der Ladestrom gemäß der Beziehung

$$I^{\mathrm{MAX}} = \left( I_s^{\mathrm{MAX}}, s \in S \right)$$

begrenzt werden. Weiterhin kann bestimmt sein, dass jede Ladestation wenigstens einen Basis-Strom $I^{\mathrm{Basis}}$ erhält. Für einen Ladevorgang $s \in S$ wird ein Gewichtungsfaktor $w_s$ für eine Priorisierung definiert.

Damit ergibt sich das folgende Maximierungsproblem:

$$\max \sum_{s \in S} w_s \log(I_s^{\mathrm{Target}}),$$

mit den Nebenbedingungen:

$$R \cdot I^{\mathrm{Target}} \leq C,$$

$$I_s^{\mathrm{Target}} \geq I^{\mathrm{Basis}},$$

wobei R eine Matrix mit den Ladevorgängen und deren Kapazitätsbegrenzungen, C ein Vektor mit allen Kapazitätsbegrenzungen und $I^{\mathrm{Target}}$ den Lastverteilungsvektor darstellen.

Anstatt der Logarithmus-Funktion kann eine beliebige konkave Funktion verwendet werden.

Beispiel: Basierend auf dem in Fig.1 gezeigten Beispiel seien zu den dargestellten vier Ladevorgängen noch sechs weitere Ladevorgänge gegeben. In Summe ergeben sich somit n=10 Ladevorgänge. Zusätzlich sind die folgenden maximalen Kapazitäten vorgegeben:

- für den ökologischen Strom: $C_{\mathrm{ök}}$ = 45;
- für den günstigen Strom: $C_{\mathrm{günst}}$ = 200;
- für den Transformator $C_{\mathrm{Trafo}}$ = 100;
- für den Abgang 117: $C_{\mathrm{Abg1}}$ = 40;
- für den Abgang 118: $C_{\mathrm{Abg2}}$ = 100;
- für den Abgang 119: $C_{\mathrm{Abg3}}$ = 100;

Für die Ladevorgänge 1 bis 10 werden die folgenden maximalen Ladeströme vorgegeben:

$$I^{\text{MAX}} = \begin{bmatrix} 100 \\ 10 \\ 10 \\ 100 \\ 10 \\ 10 \\ 100 \\ 100 \\ 10 \\ 10 \end{bmatrix}$$

Als Mindeststrom pro Ladevorgang sei $I^{\text{Basis}}=6$ vorgegeben.

Hieraus folgt die Matrix R zu:

$$R = \begin{bmatrix} \text{Einheitsmatrix, Dimension n} \\ R_{\text{Abg1}} \\ R_{\text{Abg2}} \\ R_{\text{Abg3}} \\ R_{\text{Trafo}} \\ R_{\text{ök}} \\ R_{\text{günst}} \end{bmatrix} = \begin{bmatrix} 1 & 0 & 0 & 0 & 0 & 0 & 0 & 0 & 0 & 0 \\ 0 & 1 & 0 & 0 & 0 & 0 & 0 & 0 & 0 & 0 \\ 0 & 0 & 1 & 0 & 0 & 0 & 0 & 0 & 0 & 0 \\ 0 & 0 & 0 & 1 & 0 & 0 & 0 & 0 & 0 & 0 \\ 0 & 0 & 0 & 0 & 1 & 0 & 0 & 0 & 0 & 0 \\ 0 & 0 & 0 & 0 & 0 & 1 & 0 & 0 & 0 & 0 \\ 0 & 0 & 0 & 0 & 0 & 0 & 1 & 0 & 0 & 0 \\ 0 & 0 & 0 & 0 & 0 & 0 & 0 & 1 & 0 & 0 \\ 0 & 0 & 0 & 0 & 0 & 0 & 0 & 0 & 1 & 0 \\ 0 & 0 & 0 & 0 & 0 & 0 & 0 & 0 & 0 & 1 \\ 1 & 1 & 1 & 1 & 1 & 0 & 0 & 0 & 0 & 0 \\ 0 & 0 & 0 & 0 & 0 & 0 & 0 & 0 & 0 & 0 \\ 0 & 0 & 0 & 0 & 0 & 1 & 1 & 1 & 1 & 1 \\ 1 & 1 & 1 & 1 & 1 & 1 & 1 & 1 & 1 & 1 \\ 1 & 0 & 1 & 0 & 1 & 0 & 1 & 0 & 1 & 0 \\ 0 & 1 & 0 & 1 & 0 & 1 & 0 & 1 & 0 & 1 \end{bmatrix}$$

wobei die Spalten der Matrix R die Ladevorgänge 1 bis 10 kennzeichnen. Der Vektor $R_{\text{Abg1}}$ gibt an, dass die Ladevorgänge 1 bis 5 von dem Abgang 117 versorgt werden, der Vektor $R_{\text{Abg3}}$ gibt an, dass die Ladevorgänge 6 bis 10 von dem Abgang 119 versorgt werden. Der Abgang 118 versorgt in diesem Beispiel keinen Ladevorgang. Der Vektor $R_{\text{Trafo}}$ gibt an, dass der Transformator 101 alle Ladevorgänge 1 bis 10 versorgt. Der Vektor $R_{\text{ök}}$ gibt an, dass die Ladevorgänge 1, 3, 5, 7 und 9 mit ökologischem Strom durchgeführt werden und der Vektor $R_{\text{günst}}$ gibt an, dass die Ladevorgänge 2, 4, 6, 8 und 10 mit günstigem Strom durchgeführt werden.

Der Vektor C ergibt sich zu:

$$C^{T} = \begin{bmatrix} I^{\text{MAX}} \\ C_{\text{Abg1}} \\ C_{\text{Abg2}} \\ C_{\text{Abg3}} \\ C_{\text{Trafo}} \\ C_{\text{ök}} \\ C_{\text{günst}} \end{bmatrix} = \begin{bmatrix} 100 \\ 10 \\ 10 \\ 100 \\ 10 \\ 10 \\ 100 \\ 100 \\ 10 \\ 10 \\ 40 \\ 100 \\ 100 \\ 100 \\ 45 \\ 200 \end{bmatrix}$$

Hieraus folgt für den Lastverteilungsvektor:

$$I^{\text{Target}} = \begin{bmatrix} 7,4424 \\ 8,8365 \\ 7,4424 \\ 8,8365 \\ 7,4424 \\ 10,0000 \\ 12,6729 \\ 17,3271 \\ 10,0000 \\ 10,0000 \end{bmatrix}$$

In diesem Beispiel sind die limitierenden Nebenbedingungen die maximal zulässigen Ströme für die Ladevorgänge 6, 9 und 10, die maximal zulässige Kapazität des Abgangs 117 ($C_{\text{Abg1}}$ = 40), die maximal zulässige Kapazität des Transformators 101 ($C_{\text{Trafo}}$ = 100) sowie der maximal zulässige (oder mögliche) ökologische Strom ($C_{\text{ök}}$ = 45).

Ferner ist es auch möglich, dass die einzelnen Ladevorgänge zusätzlich eine Priorisierung mittels des Gewichtungsfaktors $w_s$ erhalten. Diese Priorisierung kann zusätzlich zu den oben genannten Vorgaben bei der Bestimmung des Lastverteilungsvektors berücksichtigt werden:

$$w = \begin{bmatrix} 1 \\ 2 \\ 3 \\ 4 \\ 5 \\ 6 \\ 7 \\ 8 \\ 9 \\ 10 \end{bmatrix} \Rightarrow I^{\text{Target}} = \begin{bmatrix} 6,0000 \\ 6,0000 \\ 6,0000 \\ 9,6675 \\ 9,5824 \\ 10,0000 \\ 13,4176 \\ 19,3325 \\ 10,0000 \\ 10,0000 \end{bmatrix}$$

Ein Vorteil des hier vorgestellten Ansatzes besteht darin, dass ein maximaler Ladestrom für mehrere Ladevorgänge, z.B. für mehrere Ladestationen und/oder Elektro-Fahrzeuge, zentral oder dezentral koordiniert werden kann unter Einhaltung vorgegebener vielseitig einstellbarer Nebenbedingungen. Die Nebenbedingungen können wirtschaftliche Vorgaben und/oder technische Vorgaben umfassen.

Beispiel: Dezentrales Lastmanagement

Das dezentrale Lastmanagement kann auf verschiedene Arten erfolgen. Nachfolgend werden beispielhaft zwei Möglichkeiten erläutert.

(1) Wahl eines Masters:
Hierbei können die Ladestationen oder die Ladevorgänge, die z.B. in einer Komponente ablauffähige Funktionen sind, einen Master auswählen, der die Lastverteilung ermittelt. Nachfolgend wird beispielhaft angenommen, dass mehrere Ladestationen als Peers (kommunizierende Komponenten oder Funktionen) agieren und sich selbst organisieren. Dieser Ansatz ist ebenso möglich für Funktionen (z.B. Ladevorgänge), die auf einer oder mehreren Komponenten ablauffähig sind.
Fällt der Master aus, erkennen dies die anderen Ladestationen, es wird ein neuer Master bestimmt. Dieser Ansatz hat den Vorteil, dass das Lastmanagement nicht für den dezentralen Ansatz angepasst werden muss, sondern ohne Änderungen aus dem zentralen Lastmanagement übernommen werden kann. Die Komplexität, welche durch eine dezentrale Umsetzung entsteht, liegt außerhalb der Lastmanagementkomponente und kann von anderen Komponenten bereitgestellt werden.
(2) Kommunikation ohne Master (auch bezeichnet als "Gossiping-Verfahren"):
Hierbei wird eine Koordinierung ohne eine zentrale Instanz durchgeführt. Die Ladestationen bilden ein Peer-to-Peer (P2P)-Netz und kommunizieren mit anderen Ladestationen (Peers), die z.B. zufällig (oder pseudozufällig) oder nach einem vorgegebenen Schema ausgewählt werden.
Hierbei können verschiedene Schätzwerte ermittelt werden, z.B. über den derzeitigen Gesamtverbrauch im P2P-Netz. Basierend auf diesen Schätzwerten entscheidet eine Lastmanagement-Komponente der Ladestation autonom über den vorzugebenden Ladestrom $I^{Target}$. Bei dem Gossiping-Verfahren wird das Lastmanagement verteilt (z.B. mittels eines verteilten Algorithmus) durchgeführt. Dieser Schritt muss für jeden Algorithmus erneut durchgeführt werden.
Das Gossiping-Verfahren eignet sich für große Netze, bei denen eine zentrale Verarbeitung zu aufwändig ist bzw. allein die Koordination einer zentralen Verarbeitung zu einer hohen Verkehrslast führen würde.

Nachfolgend wird der Ansatz (1) "Wahl eines Masters" näher beschrieben. Vor allem für eine kleine Anzahl von Ladestationen (z.B. ca. 32) ist der Verarbeitungsaufwand für den Master unkritisch und beeinträchtigt nicht die Leistungsfähigkeit der Komponenten.
Hierbei ist es von Vorteil, dass ein deterministisches Lastmanagement erreicht werden kann, bei dem keine Schwankungen durch ein Konvergenzverhalten entstehen.

Beispiel für ein dezentrales Lastmanagement mit "Wahl eines Masters"

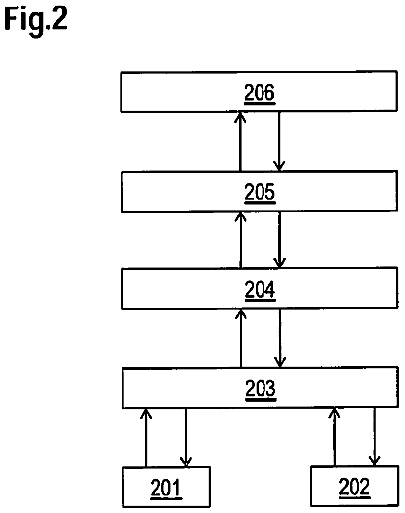

Fig.2 zeigt beispielhaft eine Architektur eines dezentralen Lastmanagements, das den Ansatz "Wahl eines Masters" ermöglicht bzw. unterstützt.
Vorzugsweise wird in den Ladestationen ein Programm eingesetzt, das den hier beschriebenen dezentralen Ansatz verfolgt. Beispielsweise kann ein und dasselbe Programm auf mehreren Ladestationen ablaufen, da so jede Ladestation (als Knoten eines P2P-Netzwerks) in der Lage ist, die Funktion des Masters zu übernehmen.
Das Programm kann unterschiedliche Kommunikationswege nutzen, z.B. drahtlose oder drahtgebundene Kommunikation. Beispielsweise können die Ladestationen über das Ethernet 201 und/oder über ein Mobilfunknetzwerk 202 (z.B. GSM, UMTS, LTE, etc.) mittels TCP/IP 203 miteinander kommunizieren.
In der Protokollarchitektur von Fig.2 ist oberhalb der TCP/ IP-Schicht 203 ein Overlay-Netzwerk 204 dargestellt, das das logische Netz oberhalb des IP-Netzes verwaltet.
In einem P2P-Netzwerk können eine große Anzahl von Peers (hier im Beispiel: Ladestationen) mit signifikanter Dynamik (Änderungen über die Zeit) vorhanden sein. Das Overlay-Netzwerk 204 kann mittels verteilter Hashtabellen (sogenannte: "Distributed Hash Tables") strukturiert sein. In dem hier beschriebenen Beispiel kann eine Verwaltung des Overlay-Netzwerks 204 in einer Konfigurationsphase (auch bezeichnet als Engineeringphase oder Parametrierung) von einer zentralen Komponente unterstützt werden, d.h. jeder Peer (Ladestation) des P2P-Netzwerks erhält eine vollständige Liste aller Peers (Ladestationen) bei dessen Konfiguration.
Basierend auf der Liste aller Peers erfolgt die Wahl des Masters 205 in jeder der Ladestationen. In einem ersten Schritt wird die Annahme getroffen, dass die Listen der Peers konsistent sind. Bei inkonsistenten Peer-Listen werden diese synchronisiert. Der Master wird anhand einer von der zentralen Instanz vergebenen Peer-ID ausgewählt. Beispielsweise wird diejenige Ladestation als Master gewählt, die die kleinste Peer-ID aufweist.

Falls eine Ladestation sich selbst als Master bestimmt hat, aktiviert sie einen Master-Modus und initialisiert ein Lastmanagement 206, z.B. durch Aktivierung eines Lastmanagement-Algorithmus. Die hierfür notwendigen Parameter können durch die zentrale Komponente festgelegt werden und können den Parametern des zentralen Lastmanagements entsprechen.

Der Master bedient beispielsweise die gleichen Schnittstellen-Aufrufe wie im zentralen Fall, z.B.:

- energyRequest() für neue Anfragen,
- sessionEnd() für das Beenden eines Ladevorgangs,
- sessionUpdate() für die Aktualisierung von Statuswerten,
- energySet() setzen des Sollwerts einer Ladestation.

Für die Schnittstellen-Aufrufe können für den dezentralen Fall z.B. entsprechende XML-Nachrichten definiert und verwendet werden.

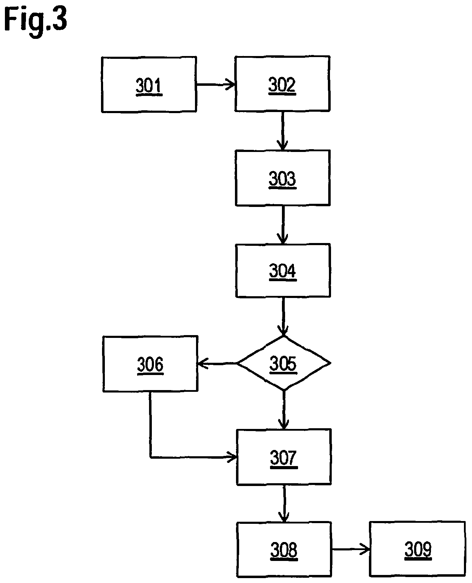

Fig.3 zeigt ein beispielhaftes Zustandsdiagramm für eine Ladestation. Zunächst erfolgt von einem initialen Zustand 301 ein Übergang in einen Zustand 302 zur Initialisierung der Ladestation. In einem nachfolgenden Zustand 303 wird das Overlay-Netzwerk initialisiert und in einem anschließenden Zustand 304 erfolgt die Wahl des Masters. Ist der Master ausgewählt wird zu einer Abfrage 305 verzweigt. Falls die aktuelle Ladestation selbst als Master ausgewählt wurde, wird zu einem Zustand 306 verzweigt, es erfolgt eine Initialisierung (oder Umstellung) der aktuellen Ladestation als Master. Nachfolgend oder wenn die Abfrage 305 ergibt, dass die aktuelle Ladestation nicht als Master ausgewählt wurde, wird in einen Zustand 307 verzweigt, in dem die Ladestation (als Master oder als normaler Peer) aktiv ist. Ein Abbruch bedingt einen Wechsel in einen Zustand 308, in dem sich die Ladestation abmeldet und in einen finalen Zustands 309 (z.B. zum Abschalten oder zur Wartung der Ladestation) übergeht.

Das dezentrale Lastmanagement kann initial parametriert werden. Bevor eine Ladestation in einem dezentralen Lastmanagement aktiv wird, erfolgt eine Verbindung zu der zentralen Komponente. Zum Beispiel kann ein Installateur nach dem Aufstellen der Ladestation über einen Laptop mittels der zentralen Komponente die Parametrierung der Ladestation durchführen.

Beispielsweise kann sich eine Ladestation bei der zentralen Komponente anmelden und erhält die Peer-Liste der verfügbaren Ladestationen. Der Installateur kann nun notwendige Parameter einstellen (setzen oder aktualisieren). Diese Art der Parametrierung ist vergleichbar zu dem Szenario des zentralen Lastmanagements. Auch können Gruppen mit Kapazitätsbeschränkungen eingestellt werden und es können Ladestationen zu Gruppen zugeordnet (in Gruppen aufgenommen oder aus Gruppen gelöscht) werden. Nach Eingabe der Informationen wird die Ladestation eingestellt, indem beispielsweise alle Parameter zur Einstellung in einer Datei zusammengefasst und an die Ladestation übertragen werden.

Fehlerbehandlung

Im Folgenden sind beispielhaft Fehlerfälle aufgeführt und es wird jeweils eine entsprechende Fehlerbehandlung vorgeschlagen.

(a) Ausfall des Masters

Ein Ausfall des Masters ist ein kritischer Fehler, und eine entsprechende Fehlerbehandlung ist für eine fortgesetzte Funktion in einem dezentralen Szenario notwendig, da ohne Master die Lastverteilung nicht möglich ist.

Beim Ausfall des Masters soll die Funktion des Masters von einer anderen Ladestation übernommen werden. Vorzugsweise werden hierfür die folgenden Schritte durchgeführt:

(i) Wahl eines Backup-Masters sowie redundante Speicherung der Lastverteilung vor dem Ausfall des Masters;
(ii) Erkennung des Ausfalls des Masters;
(iii) Wahl eines neuen Masters unter den anfragenden Ladestationen.

Um eine aktuelle Lastverteilung durch den Ausfall des Masters nicht zu verlieren, wird diese z.B. bei einem vorab zu bestimmenden Backup-Master gespeichert. Der Backup-Master kann anhand seiner Peer-ID bestimmt werden (z.B. wird die zweitkleinste Peer-ID für den Backup-Master verwendet).

Dieser Ansatz kann für mehrere Backup-Master analog angewandt werden: Um mehrere Ausfälle von Mastern ausgleichen zu können, kann eine Liste mit einer Vielzahl von Backup-Mastern verwendet werden, wobei ein Master jede Nachricht von einer Ladestation auch an die Backup-Master weiterleitet. Somit kann sichergestellt werden, dass der Zustand beim Master auch bei den Backup-Mastern repliziert ist.

Hierbei ist es eine Option, dass nur die Nachrichten und nicht die komplette Lastverteilungsinformation weitergeleitet wird. Letztere können die Backup-Master anhand der übermittelten Informationen selbst bestimmen.

Ein Ausfall des Masters kann durch die erste unbeantwortete Anfrage einer Ladestation detektiert werden. Daraufhin kontaktiert die anfragende Ladestation den (ersten) Backup-Master und sendet an diesen die unbeantwortete Anfrage. Der Backup-Master fordert von dem Master eine sogenannte "Heartbeat"-Nachricht an (also eine Information, die anzeigt, dass der Master noch aktiv ist und kommunizieren kann). Falls der Backup-Master die "Heartbeat"-Nachricht des Masters erhält, wird die Anfrage von der Ladestation nicht bearbeitet, sondern auf den eigentlichen Master verwiesen (dies kann auch geschehen, indem von dem Backup-Master nichts unternommen wird, weil der Backup-Master davon ausgeht, dass der Master die Anfrage der Ladestation beantworten wird). Falls auch der Backup-Master den Master nicht erreichen kann (also im Falle einer ausbleibenden "Heartbeat"-Nachricht), wird angenommen, dass der Master ausgefallen ist und der Backup-Master aktiviert seinen Master-Modus und bearbeitet die Anfrage der Ladestation. Eine weitere Ladestation, deren Anfrage von dem ursprünglichen Master unbeantwortet bleibt, kontaktiert den neuen Master (vormals: Backup-Master), der die Anfrage der Ladestation direkt bearbeitet.

Vorzugsweise kann, um den Backup-Master als neuen Master zu initialisieren, an diesen der komplette Zustand für das Lastmanagement (Liste mit Lastverteilungen) übertragen werden.

Alternativ zur redundanten Speicherung kann, um den Backup-Master als neuen Master zu initialisieren, an diesen der komplette Zustand für das Lastmanagement (Liste mit Lasterverteilungen) übertragen werden oder dieser kann alle anderen Ladestationen kontaktieren und deren Zustand abfragen.

(b) Ausfall einer Ladestation

Falls eine Ladestation, die nicht der Master ist, ausfällt, können zwei Situationen unterschieden werden:

    (i) Die ausgefallene Ladestation hatte keinen aktiven Ladevorgang;
    (ii) Die ausgefallene Ladestationen war in einem aktiven Ladevorgang.

Im dem ersten Fall (i) hat der Ausfall keine Auswirkungen auf das Lastmanagement und kann somit unbehandelt bleiben.

Im dem zweiten Fall (ii) könnte der Ausfall der Ladestation Auswirkungen auf das Lastmanagement haben und somit eine Überwachung von Ladestationen erfordern.

Auch ist es möglich, dass der Ausfall der Ladestation eine Ursache hat, die von einer Überwachung nicht unterscheidbar sind: Beispielsweise kann nicht unterschieden werden, ob nur ein Kommunikationsproblem vorliegt oder ob die Ladestation ausgefallen ist. Wenn nur die Kommunikation zu der Ladestation ausgefallen ist, könnte diese unverändert einen Ladevorgang durchführen. In diesem Fall können die dieser Ladestation zugewiesenen Ressourcen nicht umverteilt werden.

Eine Option besteht darin, keine Überwachung der Ladestationen durchzuführen, insbesondere falls eine Umverteilung der Ressourcen unverändert bleiben soll. Somit kann eine Fehlerbehandlung für den Ausfall einer Ladestation je nach Anwendungsfall auch unterbleiben.

(c) Wiedereintritt eines vormaligen Masters

Falls ein ehemaliger Master nach seinem Ausfall wieder aktiv wird, ist vorzugsweise sicherzustellen, dass keine Konflikte und/oder Inkonsistenzen auftreten. Beispielsweise ist es eine Möglichkeit, anzunehmen, dass ein Ausfall des Masters ein Indiz für weitere Ausfälle ist. So könnte vorgesehen sein, dass der vormalige Master seine Master-Rolle nicht wieder einnimmt. Um dies sicherzustellen, kann die Peer-ID des ehemaligen Masters geändert werden. Beispielsweise kann die Peer-ID um eine Versionsnummer erweitert werden, wobei z.B. die Versionsnummer als Präfix der Peer-ID vorangestellt wird. Die Wahl des Masters basiert weiterhin auf der kleinsten Peer-ID unter Berücksichtigung dieses Präfixes.

Für andere Ladestationen ist der ehemalige Master entweder als inaktiv markiert oder bei erneuter Anfrage antwortet dieser mit einer Aktualisierung seiner Peer-ID (umfassend die neuen Versionsnummer). Damit ist für die anfragende Ladestation bestimmbar, dass der ehemalige Master nicht mehr der aktuelle Master ist.

(d) Inkonsistente Peer-Listen

Um den Master eindeutig über alle Ladestation ermitteln zu können, wird die vorstehend genannte Peer-Liste verwendet. Entsprechend ist diese Peer-Liste konsistent zu halten.

Vorzugsweise kann die Anzahl der Ladestationen (z.B. innerhalb eines Clusters) klein (umfassend z.B. ca. 32 Ladestationen) sein. Jede Ladestation speichert die Peer-Liste mit den Peer-IDs aller anderen Ladestationen. Die Peer-Liste kann durch die zentrale Komponente parametriert werden.

Wenn eine Ladestation nachträglich hinzugefügt wird, wird die Peer-Liste anhand der zentralen Komponente parametriert. Die neue Ladestation erhält die aktualisierte Peer-Liste und kennt alle Ladestationen im Netz, die Ladestationen kennen aber - zunächst - nicht diese neue Ladestation. Vorzugsweise ist eine Synchronisation der Peer-Liste auf den Ladestationen erforderlich. Eine solche Synchronisation kann auf unterschiedliche Arten durchgeführt werden.

Beispielsweise kann vorgesehen sein, dass die neue Ladestation zunächst nicht als Master in Frage kommt; dies kann z.B. durch aufsteigende Peer-IDs sichergestellt werden, wobei die neue Ladestation die bisher höchste Peer-ID erhält und somit aktuell kaum als Master ausgewählt werden wird.

Zur Synchronisation der Peer-Listen, meldet sich die neue Ladestation (z.B. mittels einer join-Nachricht) bei allen anderen Ladestation an. Basierend auf dieser Anmeldung kann die Peer-Liste bei jeder Ladestation aktualisiert werden; der Empfänger ergänzt seine Peer-Liste um die Peer-ID und die IP-Adresse der neuen Ladestation.

**Patentansprüche**

1. Verfahren zur Bereitstellung elektrischer Energie durch eine Ladestation (109, 110, 111, 112)

   - bei dem mindestens eine Ladestation aus einer Vielzahl von Ladestationen (109, 110, 111, 112) eine Status-Änderung an ein Ladesystem übermittelt;
   - bei dem das Ladesystem eine Lastverteilung für durch die Ladestation verursachte Last bestimmt und an die mindestens eine Ladestation (109, 110, 111, 112) übermittelt;
   - bei dem die mindestens eine Ladestation (109, 110, 111, 112) die elektrische Energie gemäß der übermittelten Lastverteilung bereitstellt;
   - bei dem das Ladesystem von einer Master-Ladestation bereitgestellt wird;
   - bei dem mindestens eine Backup-Master-Ladestation bestimmt wird;
   - bei dem bei einem Ausfall der Master-Ladestation die Backup-Master-Ladestation aktiviert wird;
   **dadurch gekennzeichnet, dass**
   - bei dem Verfahren eine reaktivierte ehemalige Master-Ladestation zunächst nicht wieder als Master-Ladestation genutzt wird, solange bis ein Kriterium zur Selektion als Master-Ladestation erfüllt ist.

2. Verfahren nach Anspruch 1, bei dem die Lastverteilung bestimmt wird anhand mindestens einer einstellbaren Nebenbedingung und einer Anzahl der angeschlossenen oder aktiven Ladestationen (109, 110, 111, 112), wobei die einstellbare Nebenbedingung mindestens eine der Vorgaben umfasst:

   - eine vorgegebene maximal zulässige Kapazität;
   - ein Gewichtungsfaktor oder eine Priorisierung;
   - ein maximal zulässiger Ladestrom insbesondere pro Ladevorgang oder pro Basisstation oder pro Elektro-Fahrzeug.

3. Verfahren nach Anspruch 2, bei dem bei einer als Nebenbedingung vorgegebenen, maximal zulässigen Kapazität, diese mindestens eine der folgenden Möglichkeiten umfasst:

   - eine vorgegebene maximal zulässige Kapazität der Ladestation;
   - eine vorgegebene maximal zulässige Kapazität eines Kabels;
   - eine vorgegebene maximal zulässige Kapazität eines Transformators;
   - eine vorgegebene maximal zulässige Kapazität einer Ortsnetzstation;
   - eine vorgegebene maximal zulässige Kapazität gemäß Vereinbarung oder Vertrag;
   - eine vorgegebene maximal zulässige Kapazität eines Elektro-Fahrzeugs;
   - eine vorgegebene maximal zulässige Kapazität einer Energiequelle;
   - eine vorgegebene maximal zulässige Kapazität eines virtuellen Kraftwerks (Virtual Power Plant) (Aggregation von einer Vielzahl von Energiequellen).

4. Verfahren nach einem der vorhergehenden Ansprüche, bei dem die Master-Ladestation anhand einer Kennung ermittelt wird.

5. Verfahren nach einem der vorhergehenden Ansprüche, bei dem die Master-Ladestation jede Status-Änderung an die mindestens eine Backup-Master-Ladestation übermittelt und die mindestens eine Backup-Master-Ladestation die Lastverteilung anhand der Status-Änderungen bestimmt.

6. Verfahren nach einem der vorhergehenden Ansprüche, bei dem die Master-Ladestation die bestimmte Lastverteilung an die mindestens eine Backup-Master-Basisstation übermittelt.

7. Verfahren nach einem der Ansprüche 1 bis 3, bei dem das Ladesystem dezentral von jeder Ladestation bereitgestellt wird, wobei die elektrische Energie von der Ladestation eingestellt wird basierend auf Schätzungen, die aufgrund von Informationen oder Nachrichten anderer Ladestationen ermittelt werden.

8. Verfahren nach einem der vorhergehenden Ansprüche, bei dem anhand der bereitgestellten elektrischen Energie mindestens ein Elektro-Fahrzeug geladen wird.

9. System zum Bereitstellen elektrischer Energie mit einer Verarbeitungseinheit, die derart eingerichtet ist, dass

- eine Status-Änderung durch mindestens eine Ladestation aus einer Vielzahl von Ladestationen (109, 110, 111, 112) an ein Ladesystem übermittelbar ist;
- wobei eine von dem Ladesystem ermittelte Lastverteilung für durch eine Ladestation verursachte Last empfangen oder lokal bereitgestellt wird;
- die elektrische Energie gemäß der Lastverteilung bereitstellbar ist;
- das Ladesystem von einer Master-Ladestation bereitgestellt wird;
- mindestens eine Backup-Master-Ladestation bestimmt wird;
- bei Ausfall der Master-Ladestation die Backup-Master-Ladestation aktiviert wird;
**dadurch gekennzeichnet, dass**
- eine reaktivierte ehemalige Master-Ladestation zunächst nicht wieder als Master-Ladestation genutzt wird, solange bis ein Kriterium zur Selektion als Master-Ladestation erfüllt ist.

10. Vorrichtung nach Anspruch 9, bei der die Vorrichtung als eine Ladestation (109, 110, 111, 112) insbesondere zum Laden eines Elektro-Fahrzeugs ausgeführt ist.

**Claims**

1. Method for providing electrical energy by way of a charging station (109, 110, 111, 112),

- in which at least one charging station from a multiplicity of charging stations (109, 110, 111, 112) communicates a status change to a charging system;
- in which the charging system determines a load distribution for load caused by the charging station and communicates this to the at least one charging station (109, 110, 111, 112);
- in which the at least one charging station (109, 110, 111, 112) provides the electrical energy in accordance with the communicated load distribution;
- in which the charging system is provided by a master charging station;
- in which at least one backup master charging station is determined;
- in which the backup master charging station is activated in the event of failure of the master charging station;
**characterized in that**,
- in the method, a reactivated previous master charging station is not initially used again as master charging station until a criterion for selection as master charging station is met.

2. Method according to Claim 1, in which the load distribution is determined on the basis of at least one settable secondary condition and a number of connected or active charging stations (109, 110, 111, 112), wherein the settable secondary condition comprises at least one of the following presets:

- a preset maximum permissible capacity;
- a weighting factor or a prioritization;
- a maximum permissible charging current, in particular per charging operation or per base station or per electric vehicle.

3. Method according to Claim 2, in which, in the case of a maximum permissible capacity, preset as secondary condition, this comprises at least one of the following possibilities:

- a preset maximum permissible capacity of the charging station;

- a preset maximum permissible capacity of a cable;
- a preset maximum permissible capacity of a transformer;
- a preset maximum permissible capacity of a distribution substation;
- a preset maximum permissible capacity in accordance with an agreement or contract;
- a preset maximum permissible capacity of an electric vehicle;
- a preset maximum permissible capacity of an energy source;
- a preset maximum permissible capacity of a virtual power plant (aggregation of a multiplicity of energy sources).

4. Method according to one of the preceding claims, in which the master charging station is detected using an identification.

5. Method according to one of the preceding claims, in which the master charging station communicates each status change to the at least one backup master charging station, and the at least one backup master charging station determines the load distribution on the basis of the status changes.

6. Method according to one of the preceding claims, in which the master charging station communicates the determined load distribution to the at least one backup master base station.

7. Method according to one of Claims 1 to 3, in which the charging system is provided decentralized from each charging station, wherein the electrical energy from the charging station is adjusted on the basis of estimations which are ascertained owing to information or messages from other charging stations.

8. Method according to one of the preceding claims, in which at least one electric vehicle is charged on the basis of the provided electrical energy.

9. System for providing electrical energy, having a processing unit that is configured such that

- at least one charging station from a multiplicity of charging stations (109, 110, 111, 112) is able to communicate a status change to a charging system;
- wherein a load distribution detected by the charging system for load caused by a charging station is received or provided locally;
- the electrical energy is able to be provided in accordance with the load distribution;
- the charging system is provided by a master charging station;
- at least one backup master charging station is determined;
- the backup master charging station is activated in the event of failure of the master charging station;
**characterized in that**
- a reactivated previous master charging station is not initially used again as master charging station until a criterion for selection as master charging station is met.

10. Device according to Claim 9, in which the device is designed as a charging station (109, 110, 111, 112), in particular for charging an electric vehicle.


**Revendications**

1. Procédé de fourniture d'énergie électrique par une borne de recharge (109, 110, 111, 112), dans lequel :

- au moins une borne de recharge d'une pluralité de bornes de recharge (109, 110, 111, 112) transmet une modification de statut à un système de recharge ;
- le système de recharge définit une répartition de charge pour une charge causée par la borne de recharge et le transmet à l'au moins une borne de recharge (109, 110, 111, 112) ;
- l'au moins une borne de recharge (109, 110, 111, 112) fournit de l'énergie électrique selon la répartition de charge transmise ;
- le système de recharge est fourni par une borne de recharge maître ;
- au moins une borne de recharge maître de secours est définie ;
- en cas de défaillance de la borne de recharge maître, la borne de recharge maître de secours est activée ;
**caractérisé en ce que**
dans le procédé, une ancienne borne de recharge maître réactivée n'est tout d'abord pas de nouveau utilisée comme borne de recharge maître jusqu'à ce qu'un critère de sélection en tant que borne de recharge maître soit rempli.

2. Procédé selon la revendication 1, dans lequel la répartition de charge est définie à l'aide d'au moins une contrainte paramétrable et d'un nombre de bornes de recharge (109, 110, 111, 112) raccordées ou actives, la contrainte paramétrable comprenant au moins l'une des spécifications suivantes :

   - une capacité maximale autorisée donnée ;
   - un facteur de pondération ou une priorisation ;
   - un courant de recharge maximal autorisé en particulier par opération de recharge ou par borne de base ou par véhicule électrique.

3. Procédé selon la revendication 2, dans lequel, étant donné une capacité maximale autorisée spécifiée en tant que contrainte, celle-ci inclut au moins une des possibilités suivantes :

   - une capacité maximale autorisée prédéterminée de la borne de recharge ;
   - une capacité maximale autorisée prédéterminée d'un câble ;
   - une capacité maximale autorisée prédéterminée d'un transformateur ;
   - une capacité maximale autorisée prédéterminée d'une borne de réseau local ;
   - une capacité maximale autorisée prédéterminée selon un accord ou un contrat ;
   - une capacité maximale autorisée prédéterminée d'un véhicule électrique ;
   - une capacité maximale autorisée prédéterminée d'une source d'énergie ;
   - une capacité maximale autorisée prédéterminée d'une centrale virtuelle (Virtual Power Plant) (agrégation d'une pluralité de sources d'énergie).

4. Procédé selon l'une des revendications précédentes, dans lequel la borne de recharge maître est déterminée à l'aide d'un identifiant.

5. Procédé selon l'une des revendications précédentes, dans lequel la borne de recharge maître transmet chaque modification de statut à l'au moins une borne de recharge maître de secours et l'au moins une borne de recharge maître de secours définit la répartition de charge à l'aide des modifications de statut.

6. Procédé selon l'une des revendications précédentes, dans lequel la borne de recharge maître transmet la répartition de charge définie à l'au moins une borne de base maître de secours.

7. Procédé selon l'une des revendications 1 à 3, dans lequel le système de recharge est fourni de manière décentralisée par chaque borne de recharge, l'énergie électrique étant réglée par la borne de recharge sur la base d'estimations qui sont déterminées sur la base d'informations ou de messages d'autres bornes de recharge.

8. Procédé selon l'une des revendications précédentes, dans lequel au moins un véhicule électrique est rechargé à l'aide de l'énergie électrique fournie.

9. Système de fourniture d'énergie électrique comportant une unité de traitement qui est configurée de telle sorte que :

   - une modification de statut peut être transmise à un système de recharge par au moins une borne de recharge d'une pluralité de bornes de recharge (109, 110, 111, 112) ;
   - une répartition de charge déterminée par le système de recharge pour une charge causée par une borne de recharge est reçu ou fourni localement ;
   - l'énergie électrique peut être fournie selon la répartition de charge ;
   - le système de recharge est fourni par une borne de recharge maître ;
   - au moins une borne de recharge maître de secours est définie ;
   - en cas de défaillance de la borne de recharge maître, la borne de recharge maître de secours est activée ;
   **caractérisé en ce que**
   une ancienne borne de recharge maître réactivée n'est tout d'abord pas de nouveau utilisée comme borne de recharge maître jusqu'à ce qu'un critère de sélection en tant que borne de recharge maître soit rempli.

10. Dispositif selon la revendication 9, dans lequel le dispositif est réalisé en tant que borne de recharge (109, 110, 111, 112) en particulier pour recharger un véhicule électrique.

**Fig.1**

EP 2 665 618 B1

Fig.2

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011018270 A2
- US 20100134067 A1
- WO 2010120551 A1
- US 2005043858 A1
- WO 0173921 A2
- EP 1580862 A1

**In der Beschreibung aufgeführte Nicht-Patentliteratur**

- Max-Min Flow Control. **D. BERTSEKAS ; R. GAL-LAGER.** Data Networks. Prentice-Hall, 1992, 527, , 528